(19) Europäisches Patentamt
European Patent Office
Office européen des brevets

(11) **EP 0 999 126 A2**

(12) **EUROPÄISCHE PATENTANMELDUNG**

(43) Veröffentlichungstag:
10.05.2000 Patentblatt 2000/19

(51) Int. Cl.⁷: **B64C 3/10**, B64C 23/06

(21) Anmeldenummer: 99121216.8

(22) Anmeldetag: 23.10.1999

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **02.11.1998 DE 19850319**

(71) Anmelder:
**Deutsches Zentrum für Luft- und Raumfahrt e.V.
53175 Bonn (DE)**

(72) Erfinder:
• **Bader, Viktor
37073 Göttingen (DE)**
• **Grosche, Fritz-Reinhard, Dr.
37081 Göttingen (DE)**

(74) Vertreter:
**Patentanwälte Rehberg + Hüppe
Am Kirschberge 22
37085 Göttingen (DE)**

(54) **Flugzeugflügel mit stark gepfeilter Flügelvorderkante, insbesondere Deltaflügel**

(57) Ein Flugzeugflügel (3) mit gegenüber der Normalen zur Flugzeuglängsachse (2) stark gepfeilter Flügelvorderkante (7), insbesondere bei einem Deltaflügler, und mit einer Saugseite (5), auf der sich bei einer Anströmung des Flugzeugflügels (3) ein Tütenwirbel ausbildet, weist zur Stabilisierung der Wirbelströmung auf der Saugseite (5) mindestens eine Leitfläche (11) für den Tütenwirbel (6) auf, deren Längsrichtung gegenüber der Normalen zur Flugzeuglängsachse (2) einen Winkel δ aufweist, wobei der Winkel δ nicht kleiner ist als der Winkel θ der Flügelvorderkante (7) gegenüber der Normalen zur Flugzeuglängsachse (2), aber höchstens 85° beträgt und wobei die Leitfläche (11) derart angeordnet ist, daß sie parallel zur Wirbelachse (12) des Tütenwirbels (9) ausgerichtet und zwischen dieser und der Flügelvorderkante (7) verläuft.

Fig. 2

**Beschreibung**

Die Erfindung bezieht sich auf einen Flugzeugflügel mit gegenüber der Normalen zur Flugzeuglängsachse stark gepfeilter Flügelvorderkante und mit einer Saugseite, auf der sich bei einer Anströmung des Flügels ein Tütenwirbel ausbildet. Derartige stark gepfeilte Flugzeugflügel liegen insbesondere bei Deltaflügeln vor. Der Tütenwirbel an der Saugseite des Flugzeugflügels entwickelt sich aus einer aufgerollten Scherschicht, die von der Strömungsablösung an der Flügelvorderkante ausgeht. Der Unterdruck, der sich infolge des Tütenwirbels auf der Saugseite des Flugzeugflügels ergibt, trägt maßgeblich zum Auftrieb, aber auch zum Momentenverhalten des Flugzeugflügels bei.

Infolge des Druckfelds über dem Flugzeugflügel neigt der Tütenwirbel dazu aufzuplatzen. Der Aufplatzpunkt wandert mit zunehmendem Anstellwinkel des Flugzeugflügels über die Flügelhinterkante nach vorn. Unter dem aufgeplatzten Teil des Tütenwirbels ist der Unterdruck auf der Saugseite und damit der lokale Auftrieb geringer als vor dem Aufplatzpunkt. Dadurch verringert sich der Gesamtauftrieb. Vor allem aber entsteht ein hecklastiges Nickmoment und, im Fall des asymmetrischen Aufplatzens der Wirbel bei einem mit einem Paar von gepfeilten Flugzeugflügeln bzw. einem Deltaflügel versehenen Flugzeug, ein Rollmoment um die Flugzeuglängsachse. Diese Strömungseffekte wirken sich im allgemeinen ungünstig auf die Flugleistung und insbesondere auf die Flugeigenschaften des Flugzeugs aus. Ein asymmetrisches Aufplatzen der Tütenwirbel bei einem Flugzeug kann im Schiebeflug und beim Rollen des Flugzeugs auftreten, wodurch die Seitenstabilität des Flugzeug bis zu einem instabilen Verhalten verringert werden kann, z. B. bei dem sogenannten "wing drop" Phänomen. Daher ist es insbesondere zur Verbesserung der Flugeigenschaften, neben der grundsätzlichen Verbesserung der Flugleistungen dringend erwünscht, das Aufplatzen der Tütenwirbel zu beeinflussen.

Als Maßnahmen zur Stabilisierung der Tütenwirbel auf der Saugseite eines stark gepfeilten Flugzeugflügels ist es bekannt, die Pfeilung der Flügelvorderkanten auch dynamisch zu vergrößern (Schwenkflügler), weil die Gefahr des Aufplatzens der Tütenwirbel mit zunehmender Pfeilung der Flügelvorderkanten geringer wird. Bei gegebener Konfiguration des Flugzeugflügels können vor dem Flugzeugflügel oder als Verlängerung des Flügels nach vorn angebrachte Leitflächen, sogenannte "Strakes" oder "Leading Edge Extentions", zusätzliche Längswirbel erzeugen, deren Wechselwirkung mit den Tütenwirbeln das Aufplatzen der Tütenwirbel verzögert. Den gleichen Effekt können auch im Abstand vor dem Flugzeugflügel am Rumpf des jeweiligen Flugzeugs angebrachte "Strakes" hervorrufen. Diese "Strakes" erzeugen ebenfalls Längswirbel, die über dem Flugzeugflügel verlaufen und mit den Tütenwirbeln interferieren. Auch mit einer sägezahnförmigen Ausbildung der Flügelvorderkante, die ebenfalls definierte Längswirbel auf der Saugseite verursacht, läßt sich das Aufplatzen der Tütenwirbel verzögern. Alle bekannten Maßnahmen haben aber auch negative Auswirkungen auf die Strömung. Durch die "Leading Edge Extentions", werden beispielsweise wegen ihrer weit vorn liegenden Auftriebskomponente hecklastige Kippmomente verursacht, welche die Längsstabilität beeinträchtigen. Am Rumpf angebrachte "Strakes" können nur Längswirbel im Flügelinnenbereich erzeugen und damit nur bestimmte örtliche Bereiche der Tütenwirbel stabilisieren.

Aus der US 4739957 ist es bekannt, an der Saugseite eines Flugzeugflügels mit im Ansatzbereich zum Rumpf eines Flugzeugs stark gepfeilten Fügelvorderkante einen ausklappbaren Wirbelgenerator vorzusehen. Der Wirbelgenerator dient im ausgeklappten Zustand zur Erzeugung eines zusätzlichen Wirbels mit derselben Drehrichtung wie der an der Flügelvorderkante entstehende Tütenwirbel, um in bestimmten Flugphasen den Auftrieb über dem Flugzeugflügel zu erhöhen. Der ausgeklappte Wirbelgenerator weist dabei einen etwa parallelen Verlauf zu der Flügelvorderkante auf.

Aus der DE-AS 12 69 496 ist es bekannt, eine unerwünschte Wechselwirkung einzelner an der Flügelvorderkante entstehender Tütenwirbel auf der Saugseite eines Flugzeugflügels mit stark gepfeilter Flügelvorderkante dadurch zu unterdrücken, daß zwischen diesen Tütenwirbeln, die eine übereinstimmende Drehrichtung aufweisen, zusätzliche Wirbel mit einer entgegengesetzten Drehrichtung erzeugt werden. Hierzu sind Wirbelgeneratoren an der Saugseite des Flugzeugsflügels vorgesehen, die bezüglich der Flügelvorderkante entgegengesetzt zu der Normalen zur Flugzeuglängsachse angestellt sind.

Der Erfindung liegt die Aufgabe zugrunde, einen Flugzeugflügel der eingangs beschriebenen Art aufzuzeigen, bei dem ohne Beeinträchtigung der Strömung und ohne das Hervorrufen neuer unerwünschter Momente eine Stabilisierung des Tütenwirbeis auf der Saugseite erreicht wird, um das Momentenverhalten des jeweiligen Flugzeugs zu verbessern.

Erfindungsgemäß wird dies bei einem Flugzeugflügel der eingangs beschriebenen Art durch die Merkmale des Anspruchs 1 erreicht.

So ist auf der Saugseite mindestens eine Leitfläche für den Tütenwirbel vorgesehen, deren Längsrichtung gegenüber der Normalen zur Flugzeuglängsachse einen Winkel δ aufweist, wobei der Winkel δ nicht kleiner ist als der Winkel θ der Flügelvorderkante gegenüber der Normalen zur Flugzeuglängsachse, aber höchstens 85° beträgt. Die Leitfläche ist nicht in der Strömungshauptrichtung angeordnet, in der sich der Flugzeugflügel gegenüber der ihn umgebenden Luft bewegt. Vielmehr ist die Anordnung der Leitfläche derart, daß sie parallel zur Wirbelachse des Tütenwirbeis auf der Saugseite des Flugzeugflügels ausgerichtet und zwischen der Wirbelachse des Tütenwirbels und der Flügelvorderkante angeordnet ist. Die Leitfläche steuert so die Wirbelströmung auf der Saugseite, insbesondere die von dem Tütenwirbel induzierte Strömung nahe der Flügeloberfläche, in dem Sinne, daß die Wirbelströmung insgesamt stabilisiert und das Aufplatzen des Tütenwirbels verzögert wird.

Die Wirbelachse des Tütenwirbeis hängt auch bei einem Flugzeugflügel mit gegebener Pfeilung der Flügelvorderkante von seiner Anstellung gegenüber der Strömungshauptrichtung ab. Für eine optimale Anpassung der Leitfläche zur Stabilisierung des Tütenwirbels ist es daher bevorzugt, wenn der Winkel δ der Leitfläche gegenüber der Normalen zur Flugzeuglängsachse verstellbar ist, damit immer die optimale Ausrichtung der Leitfläche hergestellt werden kann.

Typischerweise bewegt sich der Winkel δ der Leitfläche gegenüber der Normalen zur Flugzeuglängsachse in Abhängigkeit von dem Winkel θ der Flügelvorderkante gegenüber der Normalen zur Flugzeuglängsachse in dem Bereich von $90° - 0{,}9\,(90° - θ) \le δ \le 90° - 0{,}4\,(90° - θ)$.

Für eine nutzbare Stabilisierung der Wirbleströmung sollte eine Länge 1 der Leitfläche in ihrer Haupterstreckungsrichtung mindestens 30 % einer Flügeltiefe t des Flugzeugflügels in der Richtung der Flugzeuglängsachse beträgt.

Bei der Anordnung der Leitfläche hat sich als wichtig herausgestellt, daß ein Abstand z einer Vorderkante der Leitfläche von einer Spitze des Flugzeugflügels in der Richtung der Flugzeuglängsachse von 10 % bis 20% der Flügeltiefe t des Flugzeugflügels beträgt. Daß heißt, die Leitfläche beginnt dort, wo die zu stabilisierende Wirbelströmung bereits ausgebildet ist.

Zur idealen dynamischen Anpassung der Leitfläche an den bei gegebenen Anstellwinkel und gegebener Anströmgeschwindigkeit vorliegenden Tütenwirbel ist neben dem Winkel δ der Leitfläche gegenüber der Normalen zur Flugzeuglängsachse vorzugsweise auch der Abstand a der jeweiligen Leitfläche zu der Flügelvorderkante einstellbar.

Die Leitfläche kann aber auch in die Oberfläche des Flugzeugflügels versenkbar oder einklappbar sein, um sie nur bei bestimmten, kritischen Strömungsverhältnissen zu aktivieren. Bei unkritischen Strömungsverhältnissen bleibt sie in der Oberfläche des Flugzeugflügels versenkt bzw. eingeklappt.

Insbesondere statt einer verstellbaren Leitfläche können auch mehrere Leitflächen mit unterschiedlichem Winkel δ gegenüber der Normalen zur Flugzeuglängsachse und/oder unterschiedlichem Abstand a zur Flügelvorderkante vorgesehen sein, wobei diese Leitflächen je nach Strömungszustand einzeln aktivierbar sind.

Jede Leitfläche kann senkrecht zur Oberfläche des Flugzeugflügels ausgerichtet sein. Es ist aber auch eine geneigte Ausrichtung möglich. Die optimale Ausrichtung ist danach festzulegen, wie der Tütenwirbel bei dem jeweiligen Flugzeugflügel mit ansonsten geringstem Aufwand stabilisierbar ist.

Neben dem reinen Flugzeugflügel, wie voranstehend beschrieben, betrifft die Erfindung auch ein Flugzeug mit einem Paar solcher Flugzeugflügel bzw. einem Deltaflügel. Bei dem Paar von Flugzeugflügeln bzw. dem Deltaflügel müssen einzeln aktivierbare Leitflächen nicht immer synchron aktiviert werden. Vielmehr kann es beispielsweise beim Schiebeflug sinnvoll sein, nur eine Leitfläche bei dem voreilenden Flugzeugflügel zu aktivieren, bei dem ein Wirbelplatzen durch die effektiv geringere Pfeilung eher beobachtet wird als bei dem nacheilenden Flugzeugflügel.

Besonders vorteilhaft ist die Ausbildung des neuen Flugzeugflügels bei einem Flugzeug, bei dem das Paar der Flugzeugflügel bzw. der Deltaflügel in Hochdeckeranordnung vorgesehen ist.

Die Erfindung wird im folgenden anhand von Ausführungsbeispielen näher erläutert und beschrieben, dabei zeigt

Figur 1 die Wirbelbildung an der Saugseite eines Deltaflügels,

Figur 2 die erfindungsgemäße Anordnung von Leitflächen an der Saugseite eines Deltaflügels in der Draufsicht,

Figur 3 den Deltaflügel gemäß Figur 2 in der Seitenansicht,

Figur 4 eine Auftragung des Rollmoments eines Deltaflügels über dem Anstellwinkel des Deltaflügels beim Schiebeflug mit konstantem Schiebewinkel mit und ohne Leitflächen und

Figur 5 eine Auftragung des Rollmoments eines Deltaflügels über dem Schiebewinkel beim Schiebeflug mit konstantem Anstellwinkel des Deltaflügels mit und ohne Leitflächen.

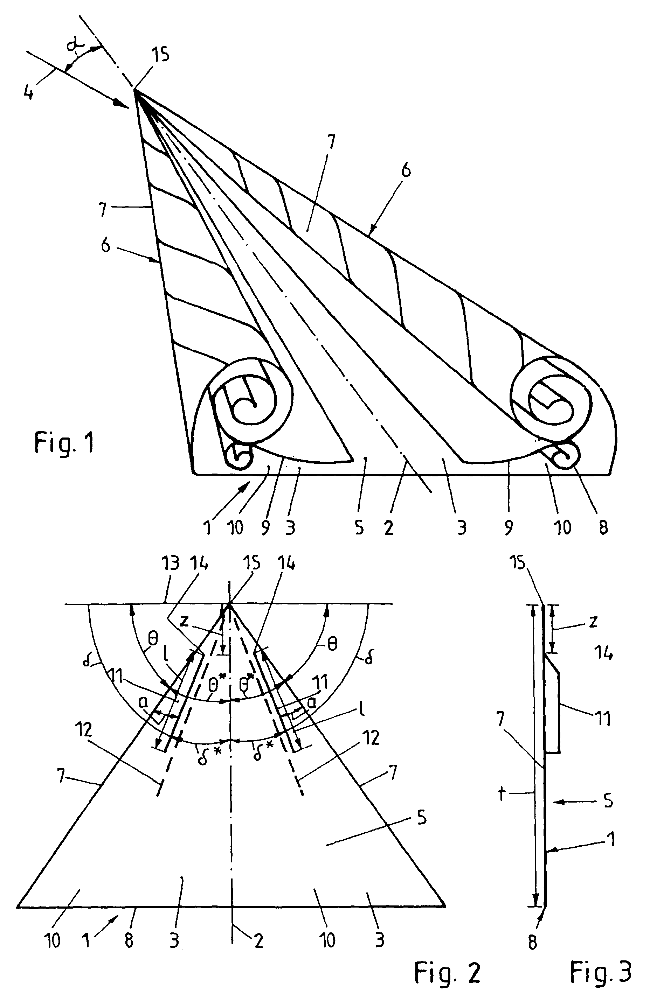

Figur 1 zeigt einen Deltaflügel 1 eines hier nicht weiter dargestellten Flugzeugs, der zwei symmetrisch zur Flugzeuglängsachse 2 angeordnete, als Flugzeugflügel 3 bezeichnete Teilflügel aufweist. Bei Anströmung des Deltaflügels 1 unter einem Anstellwinkel α gegenüber einer Strömungshauptrichtung 4 bilden sich an der damit als Saugseite 5 wirkenden Oberseite des Deltaflügels 1 Tütenwirbel 6 aus. Die Tütenwirbel 6 entstehen aus der Wirbelschicht, die von der Strömungsablösung an den Flügelvorderkanten 7 der Flugzeugflügel 3 ausgeht. Die Tütenwirbel 6 tragen maßgeblich zum Auftrieb des Deltaflügels 1 bei. Sie neigen jedoch dazu, von der Flügelhinterkante 8 her aufzuplatzen. Hierbei spielen Sekundärströmungen 9, die an den Oberflächen 10 der Flugzeugflügel von den Tütenwirbeln 6 induziert werden, eine entscheidende Rolle.

Zur Stabilisierung der Sekundärströmungen 9 gemäß Figur 1 werden Leitflächen 11 auf der Seite 5 der Flugzeugflügel 3 angeordnet, wie sie aus den Figuren 2 und 3 näher hervorgehen. Die Leitflächen 11 sind jeweils etwa parallel zu der Wirbelachse 12 des jeweiligen Tütenwirbels und zwischen dieser und der Flügelvorderkante 7 angeordnet. Die Leitflächen 11 verlaufen damit nicht in der Strömungshauptrichtung gemäß Figur 1. Vielmehr beträgt ein Winkel $\delta^*$ zwischen der Längsrichtung der Leitflächen 11 und der Flugzeuglängsachse 2 typischerweise das 0,6-fache eines Winkels $\theta^*$ zwischen der jeweiligen Flügelvorderkante 7 und der Flugzeuglängsachse 2. Die Winkel $\delta^*$ und $\theta^*$ stehen zu den schon weiter vorne angesprochenen und auf die Normale 13 zur Flugzeuglängsachse 2 bezogenen Winkeln $\delta$ und $\theta$ in der Beziehung $\delta^* = 90°\text{-}\delta$ bzw. $\theta^* = 90°\text{-}\theta$. Da sich die Lage der Wirbelachsen 12 in Abhängigkeit von dem Anströmwinkel $\alpha$ und der Anströmgeschwindigkeit in der Strömungshauptrichtung 4 ändert, können die Leitflächen 11 bezüglich des Winkels $\delta^*$ und ihres Abstands a zu den Flügelvorderkanten einstellbar ausgebildet sein. Sie können auch in die Oberfläche 10 der Flugzeugflügel 3 versenkbar oder einklappbar sein, um sie nur bei bestimmten Strömungsbedingungen, auf die sie genau abgestimmt sind, zu aktivieren. Jede Leitfläche 11 kann senkrecht zu der Oberfläche 10 des jeweiligen Flugzeugflügels 3 ausgerichtet sein. Es ist aber auch eine geneigte Ausrichtung möglich, je nachdem, wie die Sekundärströmung 9 gemäß Figur 1 in optimaler Weise stabilisiert werden kann. Eine Länge l der Leitflächen 11 in Richtung ihrer Haupterstreckung beträgt mindestens 30 % einer Flügeltiefe t der Flugzeugflügel 3 in der Richtung der Flugzeuglängsachse 2. Vorderkanten 14 der Leitflächen 11 weisen dabei von einer Spitze 15 der Flugzeugflügel 3 einen Abstand z in der Richtung der Flugzeuglängsachse 2 auf, der 10 bis 20 % der Flügeltiefe t beträgt.

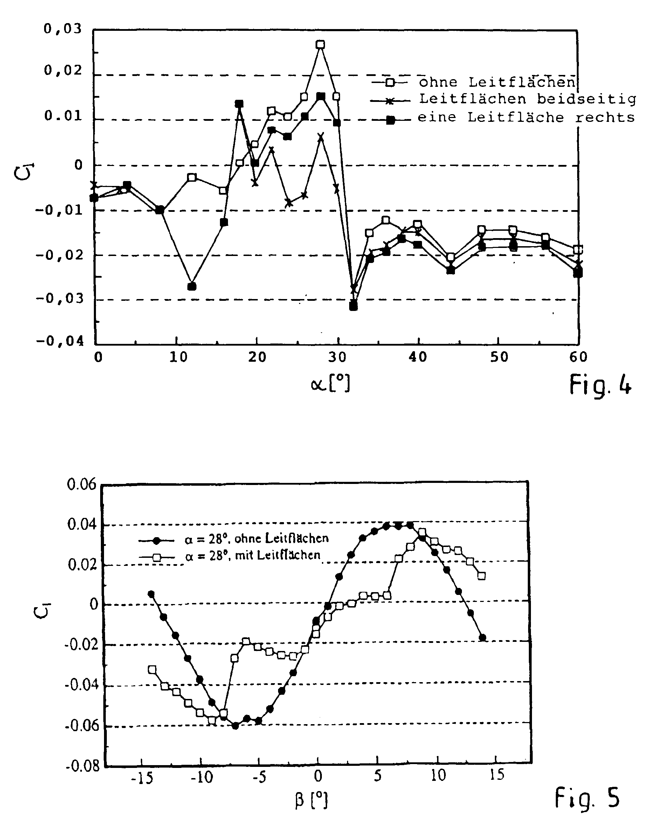

Figur 4 läßt deutlich werden, wie durch die Leitflächen 11 gemäß Figur 1 das Momentenverhalten des Deltaflügels 1 stabilisiert wird. In Figur 4 ist das Rollmoment $C_1$ in Abhängigkeit von dem Anstellwinkel $\alpha$ beim Schiebeflug eines einen Pfeilwinkel $\theta$ von 57° aufweisenden Deltaflügels 1 mit einem festen Schiebewinkel $\beta$ von +5° aufgetragen. Dabei eilt der rechte Flugzeugflügel 3 vor. Die durch offene Kästchen wiedergegebenen Meßwerte zum Rollmoment ohne Leitflächen lassen einen stark instabilen Bereich bei $\alpha$ zwischen 25° und 30° erkennen. Die Meßwerte mit einer Leitfläche auf der Saugseite des voreilenden rechten Flugzeugflügels, die durch gefüllte Kästchen wiedergegeben sind, geben die deutliche Reduktion dieser Instabilität wieder. Eine weitere Reduktion dieser Instabilität zeigt sich bei den mit Sternen wiedergegebenen Meßwerten für den Deltaflügel 1 mit Leitflächen auf der Saugseite beider Flugzeugflügel 3. Die Wirkung der Leitflächen beruht darauf, daß das Aufplatzen der Tütenwirbel und die damit verbundene Absenkung des lokalen Auftriebs verhindert bzw. zu größeren Anstellwinkeln $\alpha$ verzögert wird. Aus Figur 4 geht auch hervor, daß das Rollmoments beim Aufplatzen des Tütenwirbeis weniger starke Ausschläge zeigt und damit leichter beherrschbar ist.

In Figur 5 ist das Rollmoment $C_1$ als Funktion des Schiebewinkels $\beta$ für einen festen Anstellwinkel $\alpha = 28°$ wiederum für den Deltaflügel mit dem Pfeilwinkel $\theta$ von 57° aufgetragen. Dabei geben die gefüllten Kreise die Meßwerte für das Rollmoment ohne Leitflächen und die leeren Quadrate die Meßwerte für das Rollmoment mit Leitflächen wieder. Bis in einen Bereich von $|\beta| \leq 7°$ wird das destabilisierende Rollmoment durch die Leitflächen erheblich verringert.

## BEZUGSZEICHENLISTE

| | |
|---|---|
| 1 | - Deltaflügel |
| 2 | - Flugzeuglängsachse |
| 3 | - Flugzeugflügel |
| 4 | - Strömungshauptrichtung |
| 5 | - Saugseite |
| 6 | - Tütenwirbel |
| 7 | - Flügelvorderkante |
| 8 | - Flügelhinterkante |
| 9 | - Sekundärströmung |
| 10 | - Oberfläche |
| 11 | - Leitfläche |
| 12 | - Wirbelachse |
| 13 | - Normale zur Flugzeuglängsachse (2) |
| 14 | - Vorderkante |
| 15 | - Spitze |
| $\theta$ | - Winkel der Flügelvorderkante (7) gegenüber der Normalen (13) zur Flugzeuglängsachse (2) |
| $\delta$ | - Winlkel der Leitfläche (11) gegenüber der Normalen (13) zur Flugzeuglängsachse (2) |
| l | - Länge der Leitfläche (11) in ihrer Haupterstreckungsrichtung |
| t | - Flügeltiefe des Flugzeugflügels (3) in der Richtung der Flugzeuglängsachse (2) |
| a | - Abstand der Leitfläche (11) zu der Flügelvorderkante (7) |
| z | - Abstand der Vorderkante (14) der Leitfläche (11) von der Spitze (15) des Flugzeugflügels (3) |

## Patentansprüche

1. Flugzeugflügel (3) mit gegenüber der Normalen (13) zur Flugzeuglängsachse (2) stark gepfeilter Fügelvorderkante (7), insbesondere bei einem Deltaflügler, und mit einer Saugseite (5), auf der sich bei einer Anströmung des Flugzeugflügels (3) ein Tütenwirbel (6) ausbildet, wobei auf der Saugseite (5) mindestens eine Leitfläche (11) für den Tütenwirbel (6) vorgesehen ist, deren Längsrichtung gegenüber der Normalen (13) zur Flugzeuglängsachse (2) einen Winkel $\delta$ aufweist, wobei der Win-

kel δ nicht kleiner ist als der Winkel θ der Flügelvorderkante (7) gegenüber der Normalen (13) zur Flugzeuglängsachse (2), aber höchstens 85° beträgt und wobei die Leitfläche (11) derart angeordnet ist, daß sie parallel zur Wirbelachse (12) des Tütenwirbels (9) ausgerichtet und zwischen dieser und der Flügelvorderkante (7) verläuft.

2. Flugzeugflügel nach Anspruch 1, **dadurch gekennzeichnet**, daß der Winkel δ der Leitfläche (11) gegenüber der Normalen zur Flugzeuglängsachse (2) verstellbar ist.

3. Flugzeugflügel nach Anspruch 1, 2 oder 3, **dadurch gekennzeichnet**, daß der Winkel δ der Leitfläche (11) gegenüber der Normalen zur Flugzeuglängsachse (2) in Abhängigkeit von dem Winkel θ der Flügelvorderkante (7) gegenüber der Normalen zur Flugzeuglängsachse (2) in dem Bereich

   $$0° - 0,9 (90° - θ) \leq δ \leq 90° - 0,4 (90° - θ$$

   liegt.

4. Flugzeugflügel nach einem der Ansprüche 1 bis 3, **dadurch gekennzeichnet**, daß eine Länge l der Leitfläche (11) in ihrer Haupterstreckungsrichtung mindestens 30 % einer Flügeltiefe t des Flugzeugflügels (3) in der Richtung der Flugzeuglängsachse (2) beträgt.

5. Flugzeugflügel nach einem der Ansprüche 1 bis 4, **dadurch gekennzeichnet**, daß ein Abstand z einer Vorderkante (14) der Leitfläche (11) von einer Spitze (15) des Flugzeugflügels (3) in der Richtung der Flugzeuglängsachse (2) von 10 % bis 20% einer Flügeltiefe t des Flugzeugflügels (3) beträgt.

6. Flugzeugflügel nach einem der Ansprüche 1 bis 5, **dadurch gekennzeichnet**, daß ein Abstand a der Leitfläche (11) zu der Flügelvorderkante (7) einstellbar ist.

7. Flugzeugflügel nach einem der Ansprüche 1 bis 6, **dadurch gekennzeichnet**, daß die Leitfläche (11) in die Oberfläche (10) des Flugzeugflügels (3) versenkbar oder einklappbar sind.

8. Flugzeugflügel nach einem der Ansprüche 1 bis 7, **dadurch gekennzeichnet**, daß mehrere Leitflächen (1) mit unterschiedlichem Winkel δ gegenüber der Normalen zur Flugzeuglängsachse (2) und/oder unterschiedlichem Abstand a zur Flügelvorderkante (7) vorgesehen sind.

9. Flugzeugflügel nach einem der Ansprüche 1 bis 8, **dadurch gekennzeichnet**, daß die Leitfläche (11) senkrecht oder geneigt zur Oberfläche (10) des Flugzeugflügels (3) ausgerichtet ist.

10. Flugzeug mit einem Paar von Flugzeugflügeln bzw. einem Deltaflügel nach einem der Ansprüche 1 bis 9, wobei das Paar der Flugzeugflügel bzw. der Deltaflügel in Hochdeckeranordnung vorgesehen ist.

Fig. 1

Fig. 2

Fig. 3

Fig. 4

Fig. 5